# EUROPEAN PATENT APPLICATION

(11) **EP 4 697 795 A1**
(43) Date of publication of application: **18.02.2026**
(21) Application number: 25196167.8
(22) Date of filing: 15.08.2025
(51) Int. Cl.: H04W 28/02

(54) **SYSTEM AND METHOD FOR END-TO-END QUALITY OF SERVICE, QOS, OVER MULTI-ACCESS HETEROGENEOUS NETWORKS**

(30) Priority: 15.08.2024 US 202418806473
(71) Applicant: Shabodi Corp., Mississauga, ON L6Z 1S1 (CA)
(72) Inventor: Geekee, Hapreet, Oakville, L6H 4C3 (CA); Sood, Nitin, Toronto, M5V 2J5 (CA); Jeong, Kugsang, Mississauga, L5L 0B6 (CA)
(74) Representative: Bauer, Marcus

(57) **Abstract**

Disclosed is a system and a method for end-to-end QoS over Multi-Access Heterogeneous Networks (MAHN). The system and method implement an Application Enablement Platform (AEP) such that the AEP receives a request from an application of one or more applications, wherein the request is one of, a Quality on Demand (QoD) request or a proactive QoS request. Further, the AEP selects at least one network of a plurality of networks for the application based on the request, wherein when (i) the request is a QoD request, the selection of the at least one network is based on one of, a recommended network or a preferred network and (ii) when the request is a proactive QoS request, the selection of the at least one network is based on one more QoS parameters and a prediction model; and establishes a communication path between the at least one network and the application.

## Description

### TECHNICAL FIELD

The present disclosure communication techniques and systems, more particularly the present disclosure relates to a system and method for end-to-end Quality of Service (QoS) over multi-access heterogeneous networks.

### BACKGROUND

Quality of Service (QoS) refers to the overall performance of a network or service, particularly the performance seen by the users of the network. QoS is critical in network management, particularly in environments that demand high reliability and predictable performance, such as in telecommunication systems, multimedia applications, and data center operations. In the context of networking, QoS involves the management of network resources by setting priorities for specific types of data on the network. The prioritization helps ensure that critical data, such as real-time voice and video communication, is transmitted with minimal delay and maximum reliability, even under conditions of network congestion.

The concept of QoS emerged as a solution to address the limitations of best-effort delivery mechanisms traditionally used in packet-switched networks, where all data packets are treated equally without any guarantees on delivery times or bandwidth. As the demand for high-quality multimedia services over IP networks grew, the need for QoS mechanisms became more apparent. QoS encompasses a variety of technologies and techniques aimed at improving the user experience by managing bandwidth, reducing latency, and minimizing jitter and packet loss. These techniques include, but are not limited to, traffic shaping, prioritization, resource reservation, packet scheduling.

However, achieving optimal QoS in a heterogeneous network environment remains a challenge due to the varying characteristics of different network types and the dynamic nature of network traffic. This challenge is compounded by the need to balance competing requirements such as high performance, cost efficiency, and scalability.

Thus, there is a need for a technical solution that overcomes the aforementioned problems of conventional QoS systems and methods.

### SUMMARY

In an aspect of the present disclosure, a method for end-to-end QoS over Multi-Access Heterogeneous Networks (MAHN) is disclosed, the method comprising steps of receiving a request from an application of one or more applications. Specifically, the request is one of, a Quality on Demand (QoD) request or a proactive QoS request. The method further comprising a step of selecting at least one network of a plurality of networks for the application based on the request. When (i) the request is a QoD request, the selection of the at least one network is based on one of, a recommended network or a preferred network and (ii) when the request is a proactive QoS request, the selection of the at least one network is based on one more QoS parameters and a prediction model. Furthermore, the method comprising a step of establishing a communication path between the at least one network and the application.

In some embodiments of the present disclosure, the method further comprising a step of identifying the recommended network from the plurality of networks for the application based on requirements of one or more QoS parameters of the application. Further, the method comprising a step of transmitting information associated with the recommended network to the application such that the QoD request from the application comprising the information associated with the recommended network.

In some embodiments of the present disclosure, based on the information associated with the recommended network, the method comprising a step of updating the requirements of the QoS parameters such that updated requirements of the QoS parameters are compatible with the recommended network.

In some embodiments of the present disclosure, the QoD request comprising (i) the information associated with the recommended network and (ii) a request for connection with the recommended network.

In some embodiments of the present disclosure, the QoD request comprising (i) the information associated with the preferred network and (ii) a request for connection with the preferred network

In some embodiments of the present disclosure, the method further comprising a step of implementing a network specific interface for translating the QoS request received from the application to a network specific protocol that corresponds to each of the plurality of networks. Specifically, the network specific interface translates the QoS request by way of a plurality of network specific engines corresponding to the plurality of networks, respectively; and transmitting a logical interface to the plurality of networks.

In some embodiments of the present disclosure, prior to the selection of the network, the method further comprising a step of collecting network metrics data from each network of the plurality of networks. To collect the network metrics data, the method comprising at least one of, (i) periodically fetching the network metrics data associated with each network of the plurality of networks or (ii) monitoring each event related to a network metric associated with each network of the plurality of networks.

In some embodiments of the present disclosure, to periodically fetch the network metrics data associated with each network of the plurality of networks, the method comprising a step of performing at least of (i) invoke an API of each network of the plurality of networks or (ii) downloading a file from an Element Management System (EMS) of a Network Equipment (NE) associated with each network of the plurality of networks.

In some embodiments of the present disclosure, the network metrics data comprising one of, bandwidth, data rate for downlink, data rate for uplink, latency for upload, latency for download, response time, or a combination thereof.

In some embodiments of the present disclosure, when the request is the proactive QoS request, the method comprising a step of implementing a prediction model such that the prediction model generates predictive network metrics data based on the collected network metrics data; generating network insights based on (i) the predictive network metrics data and (ii) the collected network metrics data. Further, the method comprising identifying at least one network of the plurality of networks based on the network insights; and selecting at least one QoS interface and a network protocol to establish the communication path between the application and the at least one identified network.

In some embodiments of the present disclosure, to train the prediction model, the method comprising implementing an Artificial Intelligence (AI) model such that the AI model is configured to filter the collected network metrics data, normalize and adjust the collected network metrics data, train the prediction model iteratively with small batches of the collected network metrics data, and evaluate the performance of the trained prediction model after each batch of the collected network metrics data. Specifically, the AI model is configured to (i) adjust the batch size based on available memory and computational resources, (ii) tune the learning rate and other hyperparameters to optimize performance, and (iii) add regularization to prevent overfitting.

In another aspect of the present disclosure, a system is disclosed. The system comprising processing circuitry and a non-transitory computer-readable storage medium storing one or more computer-readable instructions that when executed by the processing circuitry, cause the processing circuitry to implement an Application Enablement Platform (AEP). The processing circuitry is configured to receive, by way of the AEP, a request from an application of one or more applications. The request is one of, a Quality on Demand (QoD) request or a proactive QoS request. The system is further configured to select, by way of the AEP, at least one network of a plurality of networks for the application based on the request. When (i) the request is a QoD request, the selection of the at least one network is based on one of, a recommended network or a preferred network and (ii) when the request is a proactive QoS request, the selection of the at least one network is based on one more QoS parameters and a prediction model. The system is further configured to establish, by way of the AEP, a communication path between the at least one network and the application.

In some embodiments of the present disclosure, the processing circuitry is configured to identify, by way of the AEP, the recommended network from the plurality of networks for the application based on requirements of one or more QoS parameters of the application. The processing circuitry is further configured to transmit, by way of the AEP, information associated with the recommended network to the application such that the QoD request from the application comprising the information associated with the recommended network.

In some embodiments of the present disclosure, based on the information associated with the recommended network, the application updates the requirements of the QoS parameters such that updated requirements of the QoS parameters are compatible with the recommended network.

In some embodiments of the present disclosure, the QoD request comprising (i) the information associated with the recommended network and (ii) a request for connection with the recommended network.

In some embodiments of the present disclosure, the QoD request comprising (i) the information associated with the preferred network and (ii) a request for connection with the preferred network.

In some embodiments of the present disclosure, the processing circuitry is configured to implement a network specific interface. Specifically, the processing circuitry is configured to translate, by way of the network specific interface, the QoS request received from the application to a network specific protocol that corresponds to each of the plurality of networks. The network specific interface translates the QoS request by way of a plurality of network specific engines corresponding to the plurality of networks, respectively. The processing circuitry is further configured to transmit, by way of the network specific interface, a logical interface to the plurality of networks.

In some embodiments of the present disclosure, prior to the selection of the network, the processing circuitry is configured to collect network metrics data from each network of the plurality of networks. To collect the network metrics data, the processing circuitry is configured to at least one of, (i) periodically fetch the network metrics data associated with each network of the plurality of networks or (ii) monitor each event related to a network metric associated with each network of the plurality of networks.

In some embodiments of the present disclosure, to periodically fetch the network metrics data associated with each network of the plurality of networks, the processing circuitry is configured to, by way of the AEP, perform at least of (i) invoke an API of each network of the plurality of networks or (ii) download a file from an Element Management System (EMS) of a Network Equipment (NE) associated with each network of the plurality of networks.

In some embodiments of the present disclosure, the network metrics data comprising one of, data rate for downlink, data rate for uplink, bandwidth, latency for upload, latency for download, response time, or a combination thereof.

In some embodiments of the present disclosure, when the request is the proactive QoS request, the processing circuitry is configured to implement the prediction model such that the prediction model generates predictive network metrics data based on the collected network metrics data. The processing circuitry is configured to generate network insights based on (i) the predictive network metrics data and (ii) the collected network metrics data. The processing circuitry is configured to identify at least one network of the plurality of networks based on the network insights. The processing circuitry is configured to select at least one QoS interface and a network protocol to establish the communication path between the application and the at least one identified network.

In some embodiments of the present disclosure, the processing circuitry is configured to implement an Artificial Intelligence (AI) model such that the AI model is configured to filter the collected network metrics data, normalize and adjust the collected network metrics data, train the prediction model iteratively with small batches of the collected network metrics data, and evaluate the performance of the trained prediction model after each batch of the collected network metrics data. Specifically, the AI model is configured to (i) adjust the batch size based on available memory and computational resources, (ii) tune the learning rate and other hyperparameters to optimize performance, and (iii) add regularization to prevent overfitting.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1A illustrates a block diagram of an architecture of an environment for implementing an embodiment of the present disclosure;
FIG. 1B illustrates a block diagram of another architecture of the environment for implementing an embodiment of the present disclosure;
FIG. 1C illustrates another block diagram of the architecture of the environment for implementing an embodiment of the present disclosure;
FIG. 2 illustrates a block diagram of an Application Enablement Platform (AEP) for proactive QoS control, according to an embodiment of the present disclosure;
FIG. 3 illustrates an internal block diagram of a network intelligence engine of the AEP, according to an embodiment of the present disclosure;
FIG. 4 illustrates another block diagram of the environment for executing a QoD request, according to an embodiment of the present disclosure;
FIG. 5 illustrates a block diagram of an environment for implementation of end-to-end Quality of Service (QoS) for multi-interface device over multi networks, according to an embodiment of the present disclosure; and
FIG. 6 illustrates a block diagram of an environment for implementation of end-to-end QoS for a plurality of devices with multiple networks on both ends, according to an embodiment of the present disclosure.
FIG. 7 illustrates a flow diagram of a method according to an embodiment of the present disclosure.

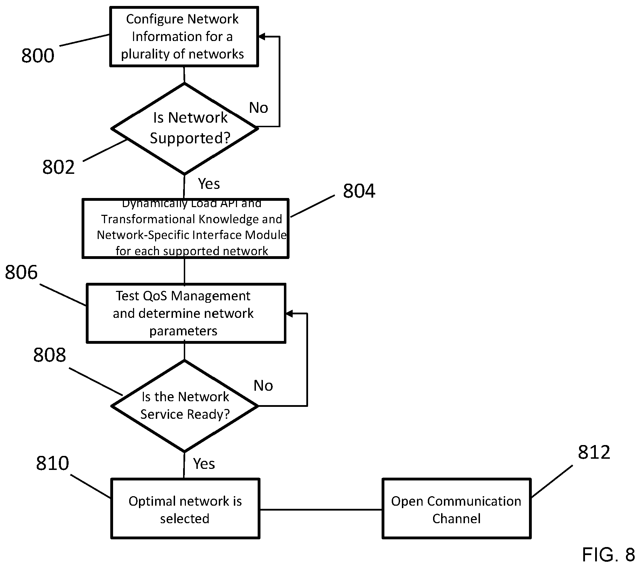

FIG. 8 illustrates a flow diagram of a method according to an embodiment of the present disclosure.
FIG. 9 shows a correlation heat map according to an embodiment of the present disclosure.
FIG. 10 shows a correlation heat map according to an embodiment of the present disclosure.

### DETAILED DESCRIPTION

The detailed description of the appended drawings is intended as a description of certain example embodiments of the present disclosure, and is not intended to represent the only form in which the present disclosure may be practiced. It is to be understood that the same or equivalent functions may be accomplished by different embodiments that are intended to be encompassed within the scope of the present disclosure.

The present disclosure provides a comprehensive end-to-end QoS (Quality of Service) approach to manage real time requirements of network aware applications to provide on demand guaranteed network resources in heterogeneous enterprise network setup with disparate network types. Each single network provides only its own QoS control method. For example, in a 5G network, PCF and NSSMF are provided. In another example, in an O-RAN network, RIC and NSSMF are provided. In a further example, in a Wi-Fi network, WLC is provided. Specifically, the present disclosure addresses situations where disparate applications running on networks with minimal correlation request network resources without knowledge of available network capacity. Further, the present disclosure addresses prioritizing network traffic in networks having static configurations without a need to understand dynamic application requirements. Furthermore, the present disclosure provides a dynamic system that provides optimal utilization of network resources while meeting application priorities where network information is not available to the applications utilizing the network. No proactive orchestration based on network awareness is needed to provision QoS over multi-access heterogeneous networks. Orchestration is achieved by intervention from OSS, BSS. Networks are statically available. However, any application can request greater bandwidth or lower latency so there are no interruptions. For example, the system provides lower latency or greater bandwidth as required for drone streaming data or a doctor performing services, thereby improving Quality of service or quality of demand.

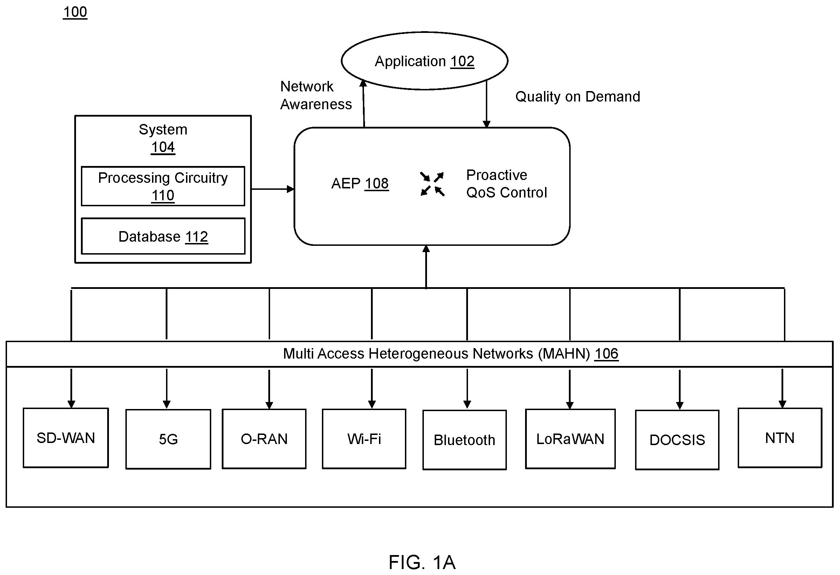

FIG. 1A illustrates a block diagram of an architecture of an environment 100 for implementing an embodiment of the present disclosure. The environment 100 may include one or more applications 102 (hereinafter collectively referred to and designated as "the applications 102" and hereinafter individually referred to and designated as "the application 102"), a system 104, and a Multi-Access Heterogeneous Network (MAHN) 106. Specifically, the system 104 may be configured to fulfill Quality of Service (QoS) requirements for one or more network aware applications (i.e., the applications 102) in a disparate enterprise environment having a plurality of networks of different types (i.e., the MAHN 106). In some embodiments of the present disclosure, the type of the plurality of networks may include, but is not limited to, Software-Defined Wide Area Network (SD-WAN), 5^{th} Generation mobile network (5G), Open Radio Network (O-RAN), Wireless Fidelity (WiFi), Bluetooth, Long Range Wide Area Network (LoRaWAN), Data-over-Cable Service Interface Specifications (DOCSIS), Non-Terrestrial Networks (NTN), and the like. Embodiments of the present disclosure are intended to include and/or otherwise cover any type of the plurality of networks, known to a person having ordinary skill in the art, without deviating from the scope of the present disclosure. Specifically, the system 104 may be configured to provide improved QoS across the plurality of networks (i.e., the MAHN 106). The system 104 may be configured to utilize a proactive approach to determine and monitor each network of the plurality of networks at each point in time such that each network of the plurality of networks is managed effectively and efficiently. The application 102 may be a network-aware application that is seeking Quality of Service (QoS) within the environment 100. For example, an application that enables streaming data by way of a drone or an application that enables a doctor to perform services, may request greater bandwidth and/or lower latency so there are no interruptions such that the system 104 may implement and deploy an Application Enablement Platform (AEP) 108 that may be configured to identify a network to which the application can be connected based on one or more requirements of the application. Specifically, the AEP 108 may enable a proactive QoS control protocol to connect the application with a suitable network based on one or more QoS parameters and a prediction model. In some embodiments of the present disclosure, the application 102, the system 104, and the MAHN 106 may be communicatively coupled to each other via a communication network and/or one or more interfaces.

The system 104 may be a network of computers, a software framework, or a combination thereof, that may provide a generalized approach to create a server implementation. Examples of the system 104 may include, but are not limited to, personal computers, laptops, mini-computers, mainframe computers, any nontransient and tangible machine that can execute a machine-readable code, cloudbased servers, distributed server networks, or a network of computer systems. The system 104 may be realized through various web-based technologies such as, but not limited to, a Java web-framework, a.NET framework, a personal home page (PHP) framework, or any web-application framework. The system 104 may be maintained by a network provider and/or a third-party entity that facilitates resource allocation operations of the system 100. The system 104 may include one or more processing circuitries of which processing circuitry 110 is shown and a non-transitory computerreadable storage medium 112 (hereinafter interchangeably referred to and designated as "the database 112").

The processing circuitry 110 may include suitable logic, instructions, circuitry, interfaces, and/or codes for executing various operations, such as enabling end-to-end QoS over multi-access heterogeneous networks. Specifically, the processing circuitry 110 may be configured to implement and deploy the AEP 108 and associated interfaces within the environment 100 for end-to-end QoS over multiaccess heterogeneous networks. In some embodiments of the present disclosure, the processing circuitry 110 may be substantially similar to, but is not limited to, an Application-Specific Integrated Circuit (ASIC) processor, a Reduced Instruction Set Computer (RISC) processor, a Complex Instruction Set Computer (CISC) processor, a Field Programmable Gate Array (FPGA), and the like. Embodiments of the present disclosure are intended to include and/or otherwise cover any type of the processing circuitry 110 known to a person having ordinary skill in the art, without deviating from the scope of the present disclosure. The non-transitory computer-readable storage medium 112 may be configured to store logic, instructions, circuitry, interfaces, and/or codes of the processing circuitry 110 for executing various operations. The database 112 may be further configured to store therein, data associated with the environment 100. Examples of the database 112 may include but are not limited to, a Relational database, a NoSQL database, a Cloud database, an Object-oriented database, and the like. Further, the database 112 may include one or more associated memories that may include, but is not limited to, a Read Only Memory (ROM), a Random Access Memory (RAM), a flash memory, a removable storage drive, a Hard Disk Drive (HDD), a solid-state memory, a magnetic storage drive, a Programmable Read Only Memory (PROM), an Erasable Programmable Read Only Memory (EPROM), an optical or holographic memory, and/or an Electrically Erasable Programmable Read-only Memory (EEPROM), and the like. Embodiments of the present disclosure are intended to include and/or otherwise cover any type of the database 112 including known, related art, and/or later developed technologies. In some embodiments, a set of centralized or distributed network of peripheral memory devices may be interfaced with the system 104, as an example, on a cloud server.

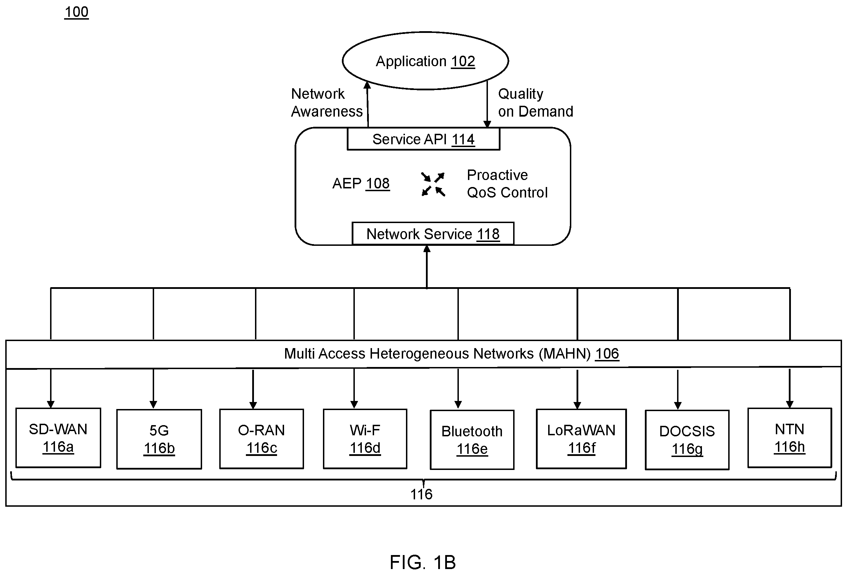

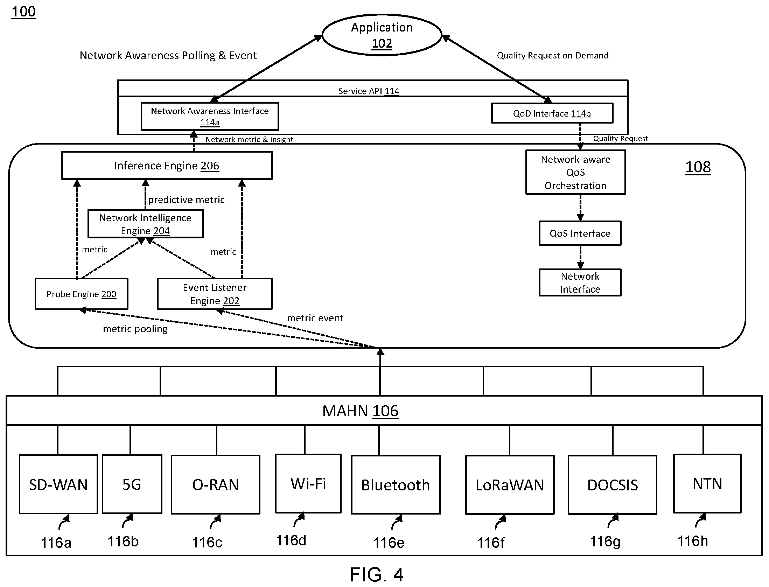

FIG. 1B illustrates a block diagram of another architecture of the environment 100 for implementing an embodiment of the present disclosure. As discussed, the environment 100 may include the applications 102, at least one service Application Programming Interface (API) 114, the AEP 108 implemented and deployed by way of the processing circuitry 110 of the system 104, and the MAHN 106. The service API 114 may be a set of defined rules and protocols that allows the applications 102 to communicate with the AEP 108. Specifically, the service API 114 may be configured to act as an intermediary that facilitates interactions between the applications 102 and the AEP 108 to enable exchange of data and to perform various functions. In some embodiments of the present disclosure, the service API 114 may be configured to dynamically adjust behavior based on communication quality and other factors such as, but not limited to, network conditions, user preferences, application requirements, and the like. Specifically, by implementing an adaptive approach (as discussed), the service API 114 may deliver the optimum performance and user experience under varying conditions. For example, when the service API 114 is a video streaming API, and the network condition represents high bandwidth and low latency, the service API 114 may prioritize a high-quality video. However, when the network condition represents moderate bandwidth and moderate latency, the service API 114 may select a medium quality setting to balance performance and quality. In some embodiments of the present disclosure, the service API 114 may include a Network Awareness Interface 114a (as shown later in FIG. 4) and a QoD Interface 114b (as shown later in FIG. 4).

The AEP 108 may be configured to enable development of a framework for multiple network aware applications, and the like. Specifically, the AEP 108 may be implemented and deployed by way of the processing circuitry 110 for an end-user to develop network aware applications. The AEP 108 may be configured to provide multiple end-to-end solutions to the end-user such as, but not limited to, a platform for development of network aware applications, a framework for a lifecycle of network aware application development, and the like. As illustrated, the AEP 108 may be configured to enable and establish a communication path between the applications 102 and the MAHN 106. Specifically, the AEP 108 may be configured to provide proactive QoS control by executing a network aware protocol and a QoD protocol to connect the application 102 with a suitable network of the MAHN 106. The term "MultiAccess Heterogeneous Network (MAHN)" refers to a type of communication network that integrates multiple types of access technologies and network architectures to provide seamless connectivity and optimized performance for users". Specifically, the MAHN 106 may integrate a plurality of networks 116 having disparate network types.
As illustrated, the plurality of networks 116 may include first through eighth networks 116a-116h. Although FIG. 1A and FIG. 1B illustrate that the MAHN 106 includes eight networks (i.e., the first through eighth networks 116a-116h), it will be apparent to a person skilled in the art that the scope of the present disclosure is not limited to it. In various other embodiments of the present disclosure, the MAHN 106 may include any number of networks, without deviating from the scope of the present disclosure. In some embodiments of the present disclosure, the first through eighth networks 116a116h may be Software-Defined Wide Area Network (SD-WAN), 5^{th} Generation mobile network (5G), Open Radio Network (O-RAN), Wireless Fidelity (WiFi), Bluetooth, Long Range Wide Area Network (LoRaWAN), Data-over-Cable Service Interface Specifications (DOCSIS), Non-Terrestrial Networks (NTN), respectively. It will be apparent to a person skilled in the art that the first through eighth networks 116a-116h are shown to be SD-WAN, 5G, O-RAN, WiFi, Bluetooth, LoRaWAN, DOCSIS, NTN, respectively, to make the illustrations concise and clear and should not be considered as a limitation of the present disclosure. In various other embodiments of the present disclosure, the first through eighth networks 116a-116h can be any type of network in any combination, without deviating from the scope of the present disclosure.

In some embodiments of the present disclosure, the AEP 108 may include a network service 118. The network service 118 may be configured to act as an access point for the MAHN 106 and to further act as a central hub that facilitates connectivity and communication between the plurality of networks 116. Specifically, the network service 118 may be configured to integrate and manage the plurality of networks 116 (having different protocols, architectures, and technologies). In an exemplary scenario, the application 102 may transmit a request such that the request is received by the AEP 108 by way of the service API 114. Specifically, the request is one of, a Quality on Demand (QoD) request or a proactive QoS request. For proactive QoS request, the AEP 108 may be configured to perform Network QoS Orchestration and identify at least one network of the plurality of networks 116 for connection with the application 102. Further, the AEP 108 may be configured to allocate the at least one network to the application 102 based on the proactive QoS request. Specifically, the AEP 108 may be configured to identify and allocate the at least one network based on one or more QoS parameters and by way of a prediction model. In some embodiments of the present disclosure, the one or more QoS parameters may include, but is not limited to, Bandwidth, Jitter, Latency, Packet loss, Mean Opinion Score (MOS), Traffic prioritization, Congestion avoidance, Customized alerts, Throughput, Reliability, Intermediate delay, Network lifetime, Network capacity, Packet delivery ratio, Energy efficiency, Connectivity robustness, End to end delay, Cost, Response time, and Path latency, and the like. Embodiments of the present disclosure are intended to include and/or otherwise cover any type of the QoS parameter that may facilitate the AEP 108 in identification of a suitable network for allocation, without deviating from the scope of the present disclosure.

In an embodiment of the present disclosure, the AEP 108 may be configured to implement a network aware protocol for processing the request. Specifically, for the QoD request, the network aware protocol may facilitate the AEP 108 to identify a recommended network of the plurality of networks 116 for the application 102. Specifically, the AEP 108 may be configured to identify the recommended network based on requirements associated with the one or more QoS parameters of the application 102. In some embodiments of the present disclosure, the requirements associated with the one or more QoS parameters may include, but are not limited to, bandwidth requirements, latency sensitivity, jitter sensitivity, packet loss tolerance, security requirements, reliability requirements, and the like. Embodiments of the present disclosure are intended to include and/or otherwise cover any type of the requirements associated with the one or more QoS parameters of the application 102 that may facilitate the AEP 108 to identify a suitable recommended network, without deviating from the scope of the present disclosure. Further, upon identification of the recommended network, the AEP 108 may be configured to transmit information (i.e., network metrics data) associated with the recommended network to the application 102. In order to receive the information associated with the recommended network, an end-user developing the application 102, may either configure the application 102 accordingly and/or develop the application 102 with a provision to accept the network awareness protocol implemented by the AEP 108. Further, in such a scenario, the application 102, based on the information of the recommended network, may update the requirements of the one or more QoS parameters such that updated requirements of the one or more QoS parameters are compatible with the recommended network. Specifically, the above approach provides the application 102 with the information needed to make a self-selection of a network of the plurality of networks 116 for a Quality on Demand (QoD) request instead of the proactive QoS request. The term "QoD" as used herein refers to a process in which the application 102 is configured to directly transmit a request to the AEP 108. Specifically, the request, in such a case may include, but not be limited to, the information associated with the recommended network and a request for connection with the recommended network. In another scenario, for the QoD request, the application 102 may have a preference of a network of the plurality of networks 116 and transmit the QoD request to the AEP 108. Specifically, the QoD request, in such a case may include, but not be limited to, the information associated with the preferred network and a request for connection with the preferred network.

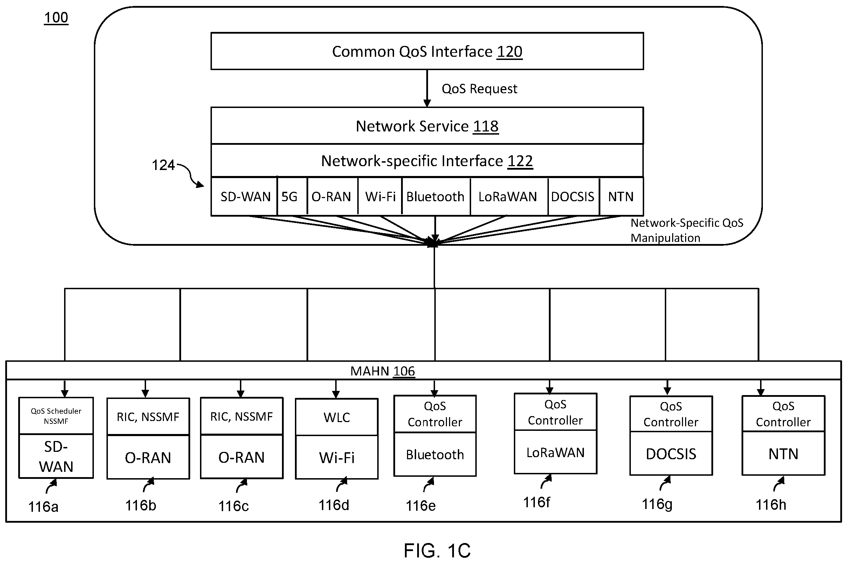

FIG. 1C illustrates another block diagram of the architecture of the environment 100 for implementing an embodiment of the present disclosure. As illustrated, the environment 100 may further include a common QoS interface 120 and a network specific interface 120. The common QoS interface 120 may enable the application 102 (not shown) and the AEP 108 (not shown) to communicate and manage QoS settings to ensure appropriate allocation of one or more networks of the plurality of networks 116 is achieved. Specifically, the common QoS interface 120 may be configured to allow the application 102 to request and negotiate the one or more QoS parameters. Further, the network specific interface 122 may be configured to translate the request received from the application 102 to a network specific protocol that corresponds to each of the plurality of networks 116. In some embodiments of the present disclosure, the network specific interface 122 may be configured to translate the request to the network specific protocol by way of a plurality of network specific engines 124. Specifically, the plurality of network specific engines 124 may be associated to the plurality of networks 116, respectively. Further, the network specific interface 122 may be configured to transmit the translated network specific protocol of the request to a logical interface (not shown) associated with each of the corresponding networks of the plurality of networks 116. The logical interface that may be configured on a controller (not shown) associated with each network of the plurality of networks 116 may enable the controller (i.e., a network device) to logically separate and/or manage multiple communication channels and/or services over a single physical interface. The controller of each network of the plurality of networks 116 may be configured to act as an access point that communicates with the AEP 108. As discussed in reference to FIG. 1A, the AEP 108 may be configured to implement the network aware protocol for proactive QoS request, the QoD request, and QoS orchestration. Specifically, for the QoD request, the AEP 108 may be configured to identify a recommended network of the plurality of networks 116 for the application 102. In some embodiments of the present disclosure, for network aware protocol, the AEP 108 may be configured to collect network metrics data from each network of the plurality of networks 116 by way of a polling method and/or an event method. Specifically, to collect network metrics data from each network of the plurality of networks 116 by way of the polling method, the AEP 108 may be configured to periodically fetch the network metrics data associated with each network of the plurality of networks 116. In an embodiment of the present disclosure, to periodically fetch the network metrics data associated with each network of the plurality of networks 116, the AEP 108 may be configured to invoke an API of each network of the plurality of networks 116. In another embodiment of the present disclosure, to periodically fetch the network metrics data associated with each network of the plurality of networks 116, the AEP 108 may be configured to download a file from an Element Management System (EMS) of a Network Equipment (NE) associated with each network of the plurality of networks 116. Further, to collect network metrics data from each network of the plurality of networks 116 by way of the event method, the AEP 108 may be configured to subscribe to all events related to the network metrics data associated with each network of the plurality of networks 116. In other words, to collect network metrics data from each network of the plurality of networks 116 by way of the event method, the AEP 108 may be configured to monitor each event related to a network metric associated with each network of the plurality of networks 116. In some embodiments of the present disclosure, for the proactive QoS request, the AEP 108 may be configured to implement a prediction model such that the prediction model generates predictive network metrics data based on the collected network metrics data. In some embodiments of the present disclosure, the network metrics data may include, but is not limited to, data rate for downlink, data rate for uplink, bandwidth, latency for upload, latency for download, response time, and the like. Embodiments of the present disclosure are intended to include and/or otherwise cover any type of the network metrics data, known to a person having ordinary skill in the art, without deviating from the scope of the present disclosure.

In certain embodiments, the AEP 108 predicts network metrics, such as, for example, bandwidth, latency for upload or download, response time or other metrics, using artificial intelligence-based or machine learning-based network intelligence. To achieve this, the system is trained using training models derived from historic network and connectivity data collected from operating the system over a period of time, such as months or years.

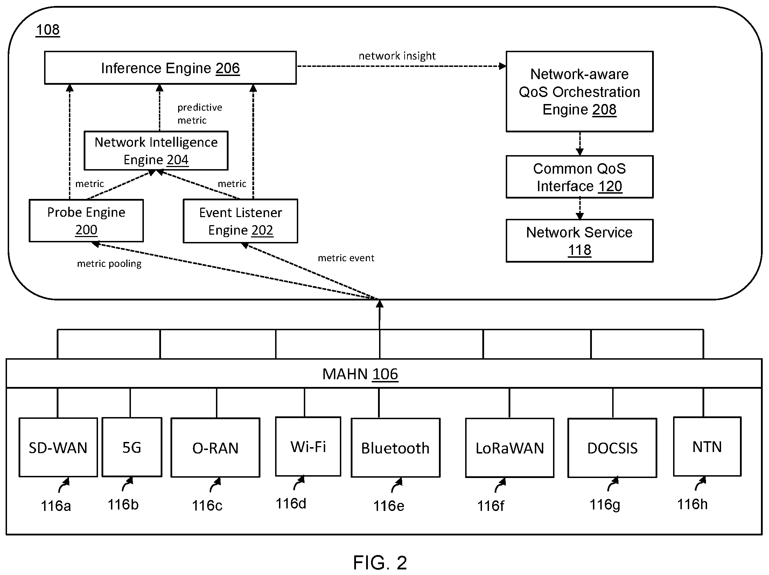

FIG. 2 illustrates a block diagram of the AEP 108 for proactive QoS control to process the request received from the application 102 (not shown), according to an embodiment of the present disclosure. As illustrated, the AEP 108 that may be implemented by way of the processing circuitry 110 of the system 104 (as shown in FIG. 1A) may include a probe engine 200, an event listener engine 202, a network intelligence engine 204, an inference engine 206, and a QoS orchestration engine 208.

The probe engine 200 may be configured to obtain network metrics data by periodically probing each network of the plurality of networks 116 of the MAHN 106. Specifically, the probe engine 200 may be configured to periodically poll an interface (each network has an interface to provide network metrics data) to obtain the network metrics data. In an embodiment of the present disclosure, to periodically fetch the network metrics data associated with each network of the plurality of networks 116, the AEP 108 may be configured to invoke an API of each network of the plurality of networks 116. In another embodiment of the present disclosure, to periodically fetch the network metrics data associated with each network of the plurality of networks 116, the AEP 108 may be configured to download a file from an Element Management System (EMS) of a Network Equipment (NE) associated with each network of the plurality of networks 116. The event listener engine 202 may be configured to subscribe to all events related to the network metrics data associated with each network of the plurality of networks 116. In other words, to collect network metrics data from each network of the plurality of networks 116, the event listener engine 202 may be configured to continuously monitor each event from each of the underlying network of the plurality of networks 116. Upon detection of an event, the event listener engine 202 may be configured to provide data associated with the event (as and when the data occurs) to the network intelligence engine 204.

The network intelligence engine 204 may be coupled to the probe engine 200 and the event listener engine 202. The network intelligence engine 204 may be configured to implement a prediction model such that the prediction model generates predictive network metrics data based on the collected network metrics data from the probe engine 200 and the event listener engine 202. Specifically, the prediction model implemented by the network intelligence engine 204 may be, for example, a deep learning or regression model. The inference engine 206 may be coupled to the network intelligence engine 204, the probe engine 200, and the event listener engine 202. The inference engine 206 may be configured to receive the predictive network metrics data from the network intelligence engine 204. Further, the inference engine 206 may be configured to receive the network metrics data (i.e., raw data) from the probe engine 200, and the event listener engine 202. The inference engine 206 may be configured to generate network insights based on the predictive network metrics data and the network metrics data received from the probe engine 200 and the event listener engine 202.

The QoS orchestration engine 208 may be coupled to the inference engine 206. Specifically, the QoS orchestration engine 208 may be configured to receive the network insights generated by the inference engine 206 such that the QoS orchestration engine 208 determines and/or identifies a suitable network of the plurality of networks 106 that meets the QoS requirements of the application 102 for network aware protocol. Further, upon identification of the suitable network, the QoS orchestration engine 208 may be configured to select a QoS interface (such as the common QoS interface 120) to route one or more signals. Further, the network service 118 may be configured to select a network protocol and/or network mode associated with the identified network of the plurality of networks 116 to establish a communication path with the application 102. Specifically, to establish the communication path, the AEP 108 may be configured to (i) configure network information for the application 102 seeking a network connection, (ii) determine the selected network is supported, (iii) when the AEP 108 determines that the selected network is supported, the AEP 108 may dynamically load the API and transformational knowledge, (iv) further, the AEP 108 may dynamically load network-specific interface model and test QoS management, (vi) The AEP 108 may be further configured to determine whether the network service 118 is ready. When the AEP 108 determines that the network service 118 is ready, the AEP 108 is configured to open the communication path.

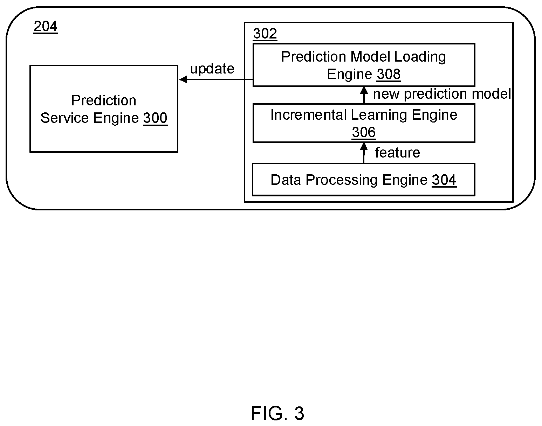

FIG. 3 illustrates an internal block diagram of the network intelligence engine 204 of the AEP 108, according to an embodiment of the present disclosure. As illustrated, the network intelligence engine 204 that may be implemented by way of the processing circuitry 110 of the system 104 (as shown in FIG. 1A) may include, but is not limited to, a prediction service engine 300 and a model update engine 302. As discussed, the prediction service engine 300 of the network intelligence engine 204 may be configured to implement a prediction model such that the prediction model generates predictive network metrics data based on the collected network metrics data from the probe engine 200 (as shown in FIG. 2) and the event listener engine 202 (as shown in FIG. 2). Specifically, the prediction model implemented by the prediction service engine 300 may be a regression model.

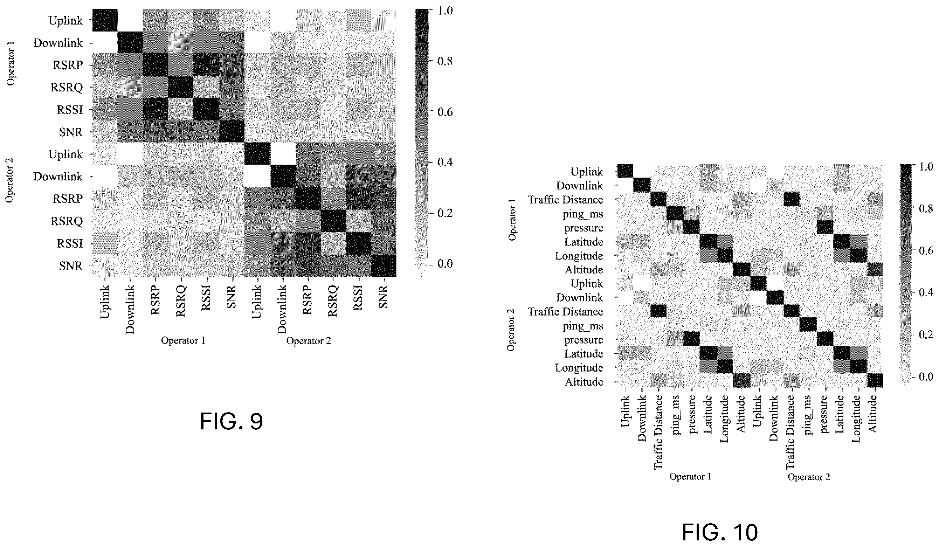

One example of a regression model is shown in FIG. 9. As can be seen, FIG. 9 depicts a correlation heatmap of uplink and downlink between RSRP, RSRQ, RSSI, and SNR. Another example of a regression model is shown in FIG. 10. As can be seen, FIG. 10 depicts a correlation heatmap of uplink and downlink between physical features or distance, ping, air pressure, latitude, longitude, and altitude.

In certain embodiments, the prediction model implemented by the prediction service engine 300 may be a deep learning model. Preferably, the prediction model implemented by the prediction service engine 300 may be an Artificial Neural Network (ANN) model. In operation, the prediction service engine 300 may be configured to utilize a telecommunication dataset (*e*.*g*., an International Telecommunication Union (ITU) Artificial Intelligence (AI) dataset) collected by multiple operators in different cars driving through an area to generate the predictive network metrics data based on the collected network metrics data. Embodiments of the present disclosure are intended to include and/or otherwise cover any type of the telecommunication dataset, known to a person having ordinary skill in the art, without deviating from the scope of the present disclosure. The ANN model may be configured to select one or more features from the telecommunication dataset (hereinafter interchangeably referred to and designated as "the dataset"). In some embodiments of the present disclosure, the dataset may be utilized for training and testing the ANN model. Specifically, 80% of the dataset may be utilized to train the ANN model and 20% of the dataset may be utilized to test the ANN model. The ANN model may be configured to select one or more features such that irrelevant and/or redundant variables are removed, thus improving efficiency, accuracy, and interpretability of the ANN model and avoid overfitting of neural networks of the ANN model. For example, the ANN model may be configured to select a plurality of input feature variables to generate the predictive network metrics data. Specifically, the plurality of input feature variables may be 13 input variables. For example, the 13 input feature variables may be, PCell_SNR_max, PCell_RSRP_max, PCell_RSRQ_max, PCell_RSSI_max, PCell_Downlink_Average_MCS, PCell_freq_MHz, SCell_SNR_max, SCell_RSRP_max, SCell_RSRQ_max, SCell_RSSI_max, SCell_Downlink_Average_MCS, SCell_freq_MHz, and ping_ms. Embodiments of the present disclosure are intended to include and/or otherwise cover any of the input feature variables that enable improvement in the ANN model and increase accuracy of the ANN model, without deviating from the scope of the present disclosure. In some embodiments of the present disclosure, a hidden layer of the ANN model may have a plurality of neurons that may enable the ANN model to use approximate outputs using more complex functions. Specifically, the plurality of neurons may include 64 neurons. Further, a number of epochs and a batch size of the ANN model may be set to 1000 and 32, respectively. In some embodiments of the present disclosure, the batch size of the ANN model may be greater than 1 and less than a number of parameters. Specifically, smaller batch sizes may introduce more noise into the optimization process. However, smaller batch sizes may help the ANN model to generalize better and converge faster. In some embodiments of the present disclosure, a Mean Squared Error (MSE) of the ANN model may be 89.81575775146484. The term "Mean Squared Error (MSE)" as used herein refers to a measure of an average of the squared differences between predicted and actual values. Lower MSE values indicate better model performance. Further, a R-Squared (R2) value of the ANN model may be 0.9617436276875649. The term "R-squared (R2) value" as used herein refers to a measure of a proportion of the variance in the target variable that is predictable from the independent variables. It ranges from 0 to 1, with higher values indicating a better fit. A value of 1 means a perfect fit. Further, a Mean Absolute Error (MAE) of the ANN model is 5.85. The term "Mean Absolute Error (MAE)" as used herein refers to a metric that measures the average absolute difference between the predicted and actual values. Smaller MAE values indicate better accuracy in predicting the target variable. Further, a Mean Absolute Percentage Error (MAPE) is 9.18%. The term "Mean Absolute Percentage Error (MAPE)" as used herein refers to metrics that express the prediction error as a percentage of the actual value. They can provide insight into the relative size of the errors. A smaller MPE or MAPE indicates better accuracy. In another example, the parameters used included PCell: RSRP, RSRQ, RSSI, SNR, and Downlink Average MCS; SCell RSRP, RSRQ, RSSI, SNR, Downlink Average MCS. The Mean Squared Error was 128.09872436523438. The R-Squared Value was 0.94543727931438. The MAE was 6.15, and the MAPE was 9.15%.

In some embodiments of the present disclosure, the model update engine 302 may be configured to implement an Artificial Intelligence (AI) model such that the AI model improves the deep learning model implemented by the prediction service engine 300 by way of incremental learning. Specifically, the model update engine 302 may include, but is not limited to, a data preprocessing engine 304, an incremental learning engine 306, and a prediction model loading engine 308. Specifically, the data preprocessing engine 304 may be configured to filter the collected network metrics data to ensure that only relevant and high-quality data is used for training the deep learning model. In some embodiments of the present disclosure, to filter the collected network metrics data, the data preprocessing engine 304 may be configured to perform steps, such as, but not limited to, removing irrelevant features, handling missing values, filtering outliers, and the like. Further, the data preprocessing engine 304 may be configured to normalize and adjust the collected network metrics data and transmit the normalized network metrics data to the incremental learning engine 306. The incremental learning engine 306 may be configured to train a deep learning model iteratively with small batches of data received. Further, the incremental learning engine 306 may be configured to evaluate the performance of the trained deep learning model after each batch of the data. In some embodiments of the present disclosure, the incremental learning engine 306 may be configured to adjust the batch size based on available memory and computational resources, tune the learning rate and other hyperparameters to optimize performance, and adding regularization to prevent overfitting. Once the trained deep learning model is ready, the prediction model loading engine 308 may be configured to load the trained deep learning model and update the prediction service engine 300.

FIG. 4 illustrates another block diagram of the environment 100 for executing the QoD request, according to an embodiment of the present disclosure. As discussed, the service API 114 may be a set of defined rules and protocols that allows the applications 102 to communicate with the AEP 108. Specifically, the service API 114 may be configured to act as an intermediary that facilitates interactions between the applications 102 and the AEP 108 to enable exchange of data and to perform various functions. In some embodiments of the present disclosure, the service API 114 may be configured to dynamically adjust behavior based on communication quality and other factors such as, but not limited to, network conditions, user preferences, application requirements, and the like. Specifically, by implementing an adaptive approach (as discussed), the service API 114 may deliver the optimum performance and user experience under varying conditions. In some embodiments of the present disclosure, the service API 114 may include the Network Awareness Interface 114a and the QoD Interface 114b. Specifically, the Network Awareness Interface 114a and the QoD Interface 114b may be specific API for executing the network aware protocol and the QoD protocol. The Network Awareness Interface 114a may be coupled to the inference engine 206 (as shown in FIG. 2) that generates network insights based on the predictive network metrics data and the network metrics data received from each network of the plurality of networks 106. This may be received, for example, via the probe engine 200 or the event listener engine 202. The Network Awareness Interface 114a may be configured to transmit the network metrics data received by way of the probe engine 200 and the event listener engine 202 (as shown in FIG. 2) to the application 102 such that based on the network metrics data, the application 102 determines which network to select. In other words, by way of the Network Awareness Interface 114a, the AEP 108 may be configured to identify a recommended network of the plurality of networks 106 for the application 102. Specifically, the AEP 108 may be configured to identify the recommended network based on requirements associated with the one or more QoS parameters of the application 102. Further, upon identification of the recommended network, the AEP 108 may be configured to transmit information (i.e., network metrics data) associated with the recommended network to the application 102. Further, in such a scenario, the application 102, based on the information of the recommended network, may update the requirements of the one or more QoS parameters such that updated requirements of the one or more QoS parameters are compatible with the recommended network. Specifically, the above approach provides the application 102 with the information needed to make a self-selection of a network of the plurality of networks 106 for the QoD request. Specifically, the QoD request, in such a case may include, but not limited to, the information associated with the recommended network and a request for connection with the recommended network. In another scenario, the application 102 may have a preference for a network of the plurality of networks 106. In such a case, the QoD request, may include, but not limited to, the information associated with the preferred network and a request for connection with the preferred network.

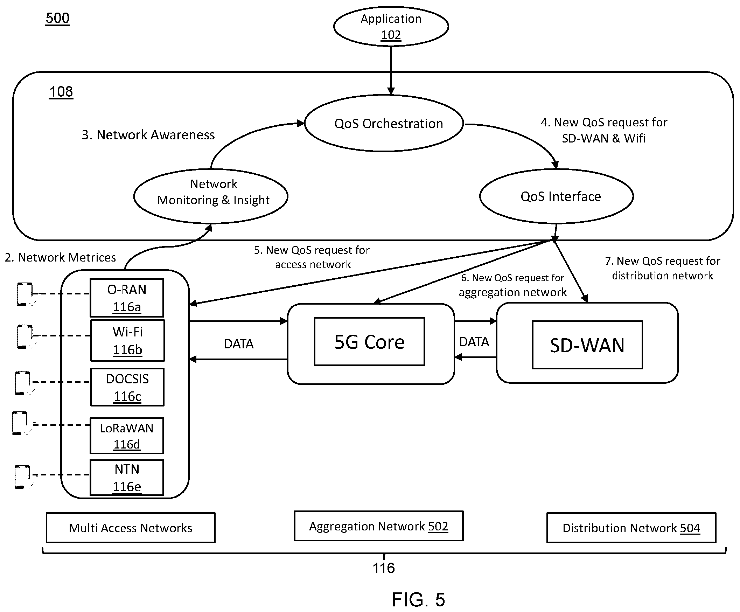

FIG. 5 illustrates a block diagram of an environment 500 for implementation of end-to-end QoS for multi-interface device over multi networks, according to an embodiment of the present disclosure. As illustrated, the environment 500 may include, but is not limited to, the applications 102, the AEP 108, the plurality of networks 116 may include the first through fifth networks 116a-116e, at least one aggregation network 502, and at least one distribution network 504. As discussed, the AEP 108 may be configured to collect the network metrics data from each network of the first through fifth networks 116a-116e. The AEP 108 may be configured to collect the network metrics data from each network of the first through fifth networks 116a116e by way of a polling method and/or an event method as discussed earlier. Further, the AEP 108 may be configured to generate network insights based on the predictive network metrics data generated by the AEP 108 based on the network metrics data and the collected network metrics data. Further, the AEP 108 may be configured to determine and/or identify a suitable network of the plurality of networks 116 that meets the QoS requirements of the application 102 based on the QoD protocol. In an exemplary scenario, the AEP 108 identifies and generates a QoS request for SD-WAN (*i*.*e*., the at least one distribution network 504) and a QoS request for an access network (*i*.*e*., WiFi) of the plurality of networks 116. Further, upon identification of the suitable network, the AEP 108 may be configured to select a QoS interface (such as the common QoS interface 120) (as shown in FIG. 1C) to establish a communication path between the application 102 and the selected network of the plurality of networks 116. In an embodiment of the present disclosure, the QoS interface (such as the common QoS interface 120) may be configured to establish a communication path between the application 102 and the access network (*i*.*e*., WiFi) of the plurality of networks 116. In another embodiment of the present disclosure, the QoS interface (such as the common QoS interface 120) may be configured to establish a communication path between the application 102 and the at least one distribution network 504 (*i*.*e*., the SD-WAN). In another embodiment of the present disclosure, the QoS interface (such as the common QoS interface 120) may be configured to establish a communication path between the application 102 and the at least one aggregation network 502 (*i*.*e*., the 5G core).

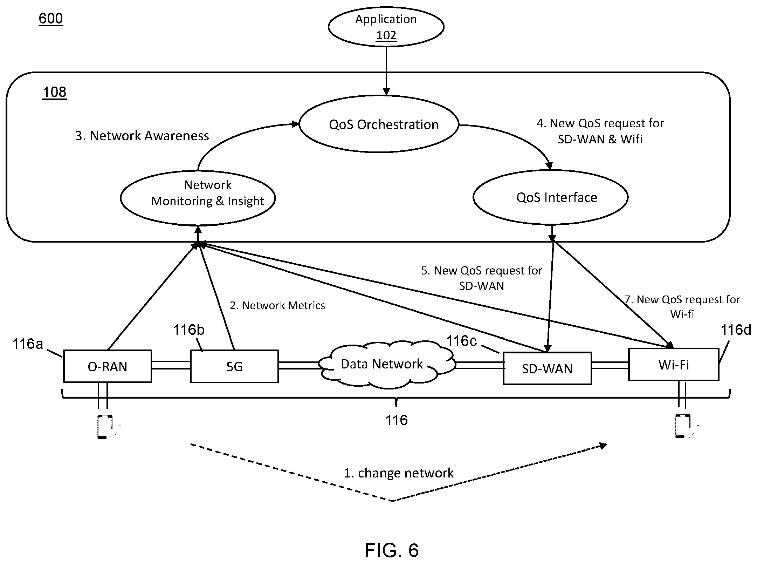

FIG. 6 illustrates a block diagram of an environment 600 for implementation of end-to-end QoS for a plurality of devices with multiple networks on both ends, according to an embodiment of the present disclosure. As illustrated, the environment 600 may include, but is not limited to, the applications 102, the AEP 108, and the plurality of networks 116 that may include the first through fourth networks 116a-116d. As discussed, the AEP 108 may be configured to collect the network metrics data from each network of the first through fourth networks 116a-116d. The AEP 108 may be configured to collect the network metrics data from each network of the first through fourth networks 116a-116d by way of a polling method and/or an event method as discussed earlier. Further, the AEP 108 may be configured to generate network insights based on the predictive network metrics data generated by the AEP 108 based on the network metrics data and the collected network metrics data. Further, the AEP 108 may be configured to determine and/or identify a suitable network of the plurality of networks 116 that meets the QoS requirements of the application 102 based on the QoD request. In an exemplary scenario, the AEP 108 identifies and generates a proactive QoS request for SD-WAN and a proactive QoS request for an access network (*i*.*e*., WiFi) of the plurality of networks 116. Further, upon identification of the suitable network, the AEP 108 may be configured to select a QoS interface (such as the common QoS interface 120) to establish a communication path between the application 102 and the selected network of the plurality of networks 116. In an embodiment of the present disclosure, the QoS interface (such as the common QoS interface 120) may be configured to establish a communication path between the application 102 and a network (*i*.*e*., WiFi) of the plurality of networks 116. In another embodiment of the present disclosure, the QoS interface (such as the common QoS interface 120) may be configured to establish a communication path between the application 102 and a network (*i*.*e*., the SD-WAN) of the plurality of networks 116. Specifically, to establish the communication path, the AEP 108 may be configured to (i) configure network information for the application 102 seeking a network connection, (ii) determine the selected network is supported, (iii) when the AEP 108 determines that the selected network is supported, the AEP 108 may dynamically load the API and transformational knowledge, (iv) further, the AEP 108 may dynamically load network-specific interface model and test QoS management, (vi) The AEP 108 may be further configured to determine whether the network service 118 is ready. When the AEP 108 determines that the network service 118 is ready, the AEP 108 is configured to open the communication path.

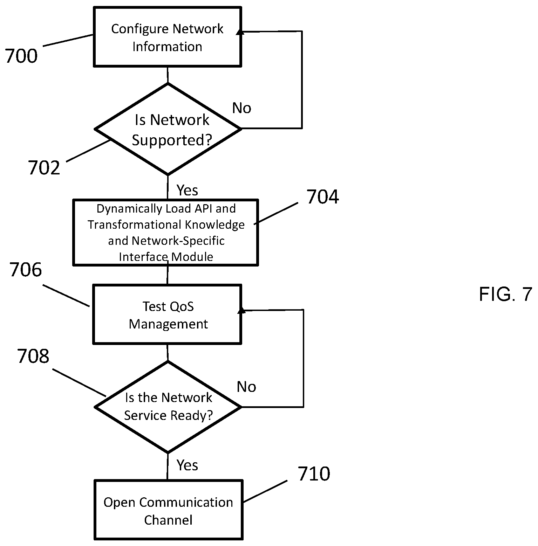

FIG. 7 illustrates a flow diagram of a method for connecting an application to one or more of a plurality of networks according an embodiment of the present disclosure. In step 700, network information is configured for an application seeking a network connection. In step 702, a determination is made as to whether the network is supported. Should the network not be supported, then the system will either automatically reselect a network and return to step 700, or provide information to the application that such network is not supported and the application will select a different network. In step 704, when the network is supported the API and transformational knowledge regarding the selected network is dynamically loaded and the networkspecific interface module is dynamically loaded. In step 706, QoS management is tested. In step 708, a determination is made as to whether the network service is ready. If the network service is not ready, then QoS management is tested again. After a certain time frame is the network service is still not ready, the system may reset the network or inform the application that the network service is not ready. In step 710, when the network service is ready, a communication channel is opened between he application and the selected network.

In certain embodiments, in step 800, network information for a plurality of networks is configured. In step 802, for each network a determination is made whether it is supported. For each supported network, in step 804 the API and transformational knowledge regarding the supported network is dynamically loaded and the networkspecific interface module is dynamically loaded. In step 806, QoS management is tested and network parameters are determined for each supported network. In step 808, for each network a determination is made as to whether the network service is ready. If a network service is not ready, then step 806 is repeated until a determination is made to deselect that network. When the selected networks are all ready or the remaining selected networks are ready, in step 810, the optimal network is selected, either by the system or by the application, and in step 812, a communication channel between the application and selected network is opened.

Thus, the system and method of the present disclosure utilizes a proactive approach to determine what is happening on the network at each point in time such that the network may be managed more effectively and efficiently. Further, the system and the method of the present disclosure may be configured to fulfill QoS requirements for one or more network aware applications (*e*.*g*., the applications 102) in disparate enterprise environments with different network types viz. 5G, LTE, Wi Fi6, Wi Fi 6E, SRV6, MPLS, Satellite, Docsis. The system and the method of the present disclosure may provide QoS management in all layers of advanced network to ensure guaranteed QoS for network aware application. For example, in 5G network beyond traditional focus on radio optimization and to ensure best utilization of resources using end to end capabilities from 5G Core, Radio, O-RAN and SDWAN. Specifically, a networkaware application (e.g., the application 102) may be configured to invoke one single Service API of the AEP 108 to request QoS it requires over multi networks environment. Further, the AEP 108 of the system and the method of the present disclosure may orchestrate the QoD request from the application 102 by manipulating each network with the network service. The system and the method of the present disclosure may be configured to collect and share comprehensive network insights in real-time with the applications 102. The system and the method of the present disclosure may collect and process the network insights from multiple sources including Radio, Core NFs, SDWAN, MDAF, NWDAF and correlate network insights / events with application events for situation aware decision making. The system and the method of the present disclosure may be adapted to update a behavior of the applications 102 and provide a feedback loop to the application 102 for requesting "reasonably feasible" network resources. The system and the method of the present disclosure may be configured to utilize AI/ML techniques for generating recommendations and predicting network & application behavior. The system and the method of the present disclosure may ensure on-demand, dynamic allocation of network resources in real time ensuring end-to-end synchronization. Utilize already existing mechanisms including slicing, O-RAN, RIC, 5G SBA to ensure standardized solution. The system and the method of the present disclosure may enable standardizing interfaces for applications to manage movement across networks (e.g., from Wi-Fi indoor to 5G outdoor) without impacting quality. The system and method of the present disclosure provides seamless porting across networks and upgrades to newer versions without changing applications.

As discussed, various embodiments of the present disclosure may be implemented in the system 104 that is suitable for storing and/or executing program code that includes at least one processor (*i*.*e*., the processing circuitry 110), including a multicore processor, coupled directly and/or indirectly to one or more memory elements such as the database 112 through a system bus (not shown). The memory elements include, for instance, local memory employed during actual execution of the program code, bulk storage, and cache memory which provide temporary storage of at least some program code in order to reduce the number of times code must be retrieved from bulk storage during execution.

Input/Output or I/O devices (including, but not limited to, keyboards, displays, pointing devices, DASD, tape, CDs, DVDs, thumb drives and other memory media) can be coupled to the system either directly or through intervening I/O controllers. Network adapters may also be coupled to the system to enable the data processing system to become coupled to other data processing systems or remote printers or storage devices through intervening private or public networks. Modems, cable modems, and Ethernet cards are just a few of the available types of network adapters.

The present disclosure may be embodied in a system, a method, and/or a computer program product. The computer program product may include a computer readable storage medium (*i*.*e*., the database 112) having computer readable program instructions thereon for causing the processing circuitry 110 to carry out aspects of the present disclosure. The computer readable storage medium 112 can be a tangible device that can retain and store instructions for use by an instruction execution device (i.e., the processing circuitry 110). The computer readable storage medium 112 may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

Computer readable program instructions described herein can be downloaded to respective computing/processing devices from the computer readable storage medium 112 or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language, "R" programming language or similar programming languages. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, may be passed, forwarded, or transmitted via any suitable means including memory sharing, message passing, token passing, network transmission, among others. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions. The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Although preferred embodiments have been depicted and described in detail herein, it will be apparent to those skilled in the relevant art that various modifications, additions, substitutions and the like can be made without departing from the scope of the disclosure, and these are, therefore, considered to be within the scope of the disclosure, as defined in the following claims.

Features or functionality described with respect to certain example embodiments may be combined and sub-combined in and/or with various other example embodiments. Also, different aspects and/or elements of example embodiments, as disclosed herein, may be combined and sub-combined in a similar manner as well. Further, some example embodiments, whether individually and/or collectively, may be components of a larger system, wherein other procedures may take precedence over and/or otherwise modify their application. Additionally, a number of steps may be required before, after, and/or concurrently with example embodiments, as disclosed herein. Note that any and/or all methods and/or processes, at least as disclosed herein, can be at least partially performed via at least one entity or actor in any manner.

The terminology used herein can imply direct or indirect, full or partial, temporary or permanent, action or inaction. For example, when an element is referred to as being "on," "connected" or "coupled" to another element, then the element can be directly on, connected or coupled to the other element and/or intervening elements can be present, including indirect and/or direct variants. In contrast, when an element is referred to as being "directly connected" or "directly coupled" to another element, there are no intervening elements present.

Although the terms first, second, etc. can be used herein to describe various elements, components, regions, layers and/or sections, these elements, components, regions, layers and/or sections should not necessarily be limited by such terms. These terms are used to distinguish one element, component, region, layer or section from another element, component, region, layer or section. Thus, a first element, component, region, layer, or section discussed below could be termed a second element, component, region, layer, or section without departing from the teachings of the present disclosure.

The terminology used herein is for describing particular example embodiments and is not intended to be necessarily limiting of the present disclosure. As used herein, the singular forms "a," "an" and "the" are intended to include the plural forms as well, unless the context clearly indicates otherwise. The terms "comprises," "includes" and/or "comprising," "including" when used in this specification, specify the presence of stated features, integers, steps, operations, elements, and/or components, but do not preclude the presence and/or addition of one or more other features, integers, steps, operations, elements, components, and/or groups thereof.

As used herein, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances.

Unless otherwise defined, all terms (including technical and scientific terms) used herein have the same meaning as commonly understood by one of ordinary skill in the art to which this disclosure belongs. The terms, such as those defined in commonly used dictionaries, should be interpreted as having a meaning that is consistent with their meaning in the context of the relevant art and should not be interpreted in an idealized and/or overly formal sense unless expressly so defined herein.

As used herein, the term "about" and/or "substantially" refers to a +/-10% variation from the nominal value/term. Such variation is always included in any given.

If any disclosures are incorporated herein by reference and such disclosures conflict in part and/or in whole with the present disclosure, then to the extent of conflict, and/or broader disclosure, and/or broader definition of terms, the present disclosure controls. If such disclosures conflict in part and/or in whole with one another, then to the extent of conflict, the later-dated disclosure controls.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Whereas many alterations and modifications of the present invention will no doubt become apparent to a person of ordinary skill in the art after having read the foregoing description, it is to be understood that the particular embodiments shown and described by way of illustration are in no way intended to be considered limiting.

## Claims

1. A method for end-to-end QoS over Multi-Access Heterogeneous Networks (MAHN), the computer-implemented method comprising:
receiving a request from an application, wherein the request is one of, a Quality on Demand (QoD) request or a proactive QoS request;
selecting at least one network of a plurality of networks for the application based on the request, wherein when (i) the request is a QoD request, the selection of the at least one network is via the application and based on one of a recommended network or a preferred network and (ii) when the request is a proactive QoS request, the selection of the at least one network is via an inference engine based on one or more QoS parameters and a prediction model; and
establishing a communication path between the at least one network and the application.

2. The method of claim 1, further comprising:
identifying the recommended network from the plurality of networks for the application based on requirements of one or more QoS parameters of the application; and
transmitting information associated with the recommended network to the application such that the QoD request from the application comprising the information associated with the recommended network.

3. The method of claim 2, wherein, based on the information associated with the recommended network, the method comprising updating the requirements of the QoS parameters such that updated requirements of the QoS parameters are compatible with the recommended network.

4. The method of claim 1, wherein the QoD request comprises information associated with one of a recommended network or a preferred network and a request for connection thereto.

5. The method of claim 1, further comprising implementing a network specific interface for:
translating the QoS request received from the application to a network specific protocol that corresponds to each of the plurality of networks, wherein the network specific interface translates the QoS request by way of a plurality of network specific engines corresponding to the plurality of networks, respectively; and
transmitting a logical interface to the plurality of networks.

6. The method of claim 1, wherein, prior to the selection of the network, the method comprising:
collecting network metrics data from each network of the plurality of networks, wherein to collect the network metrics data, the processing circuitry is configured to at least one of, (i) periodically fetch the network metrics data associated with each network of the plurality of networks or (ii) monitor each event related to a network metric associated with each network of the plurality of networks.

7. The method of claim 6, wherein to periodically fetch the network metrics data associated with each network of the plurality of networks, the method comprising performing at least one of (i) invoking an API of each network of the plurality of networks or (ii) downloading a file from an Element Management System (EMS) of a Network Equipment (NE) associated with each network of the plurality of networks, and wherein the network metrics data comprises at least one of, data rate for downlink, data rate for uplink, bandwidth, latency for upload, latency for download, response time, or a combination thereof.

8. The method of claim 1, wherein, when the request is the proactive QoS request, the method comprising:
implementing a prediction model such that the prediction model generates predictive network metrics data based on the collected network metrics data;
generating network insights based on (i) the predictive network metrics data and (ii) the collected network metrics data;
identifying at least one network of the plurality of networks based on the network insights;
selecting at least one QoS interface and a network protocol to establish the communication path between the application and the at least one identified network; and
wherein training of the prediction model comprises implementing an Artificial Intelligence (AI) model configured to: filter, normalize and adjust the collected network metrics data; train the prediction model iteratively with small batches of the collected network metrics data; and evaluate the performance of the trained prediction model after each batch, wherein the training further comprises adjusting batch size based on available memory and computational resources, tuning the learning rate and other hyperparameters to optimize performance, and adding regularization to prevent overfitting.

9. A system, comprising processing circuitry and a non-transitory computer-readable storage medium storing one or more computer-readable instructions that when executed by the processing circuitry, cause the processing circuitry to implement an Application Enablement Platform (AEP), wherein the processing circuitry is configured to:
receive, by way of the AEP, a request from an application of one or more applications, wherein the request is one of, a Quality on Demand (QoD) request or a proactive QoS request;
select, by way of the AEP, at least one network of a plurality of networks for the application based on the request, wherein when (i) the request is a QoD request, the selection of the at least one network is based on one of, a recommended network or a preferred network and (ii) when the request is a proactive QoS request, the selection of the at least one network is based on one or more QoS parameters and a prediction model; and
establish, by way of the AEP, a communication path between the at least one network and the application.

10. The system of claim 9, wherein the processing circuitry is configured to:
identify, by way of the AEP, the recommended network from the plurality of networks for the application based on requirements of one or more QoS parameters of the application; and
transmit, by way of the AEP, information associated with the recommended network to the application such that the QoD request from the application comprising the information associated with the recommended network.

11. The system of claim 9, wherein the QoD request comprising the information associated with the recommended network or a preferred network and a request for connection thereto.

12. The system of claim 9, wherein the processing circuitry is configured to implement a network specific interface, wherein the processing circuitry is configured to:
translate, by way of the network specific interface, the QoS request received from the application to a network specific protocol that corresponds to each of the plurality of networks, wherein the network specific interface translates the QoS request by way of a plurality of network specific engines corresponding to the plurality of networks, respectively; and
transmit, by way of the network specific interface, a logical interface to the plurality of networks.

13. The system of claim 9, wherein, prior to the selection of the network, the processing circuitry is configured to:
collect network metrics data from each network of the plurality of networks, wherein to collect the network metrics data, the processing circuitry is configured to at least one of, (i) periodically fetch the network metrics data associated with each network of the plurality of networks or (ii) monitor each event related to a network metric associated with each network of the plurality of networks.

14. The system of claim 13, wherein to periodically fetch the network metrics data associated with each network of the plurality of networks, the processing circuitry is configured to, by way of the AEP, perform at least one of (i) invoke an API of each network of the plurality of networks or (ii) download a file from an Element Management System (EMS) of a Network Equipment (NE) associated with each network of the plurality of networks, and wherein the network metrics data comprising one of, data rate for downlink, data rate for uplink, bandwidth, latency for upload, latency for download, response time, or a combination thereof.

15. The system of claim 9, wherein, when the request is the proactive QoS request, the processing circuitry is configured to:
implement the prediction model such that the prediction model generates predictive network metrics data based on the collected network metrics data;
generate network insights based on (i) the predictive network metrics data and (ii) the collected network metrics data;
identify at least one network of the plurality of networks based on the network insights;
select at least one QoS interface and a network protocol to establish the communication path between the application and the at least one identified network; and
wherein training the prediction model comprises implementing an Artificial Intelligence (AI) model configured to: filter, normalize, and adjust the collected network metrics data; train the prediction model iteratively with small batches of the collected network metrics data; and evaluate the performance of the trained prediction model after each batch, wherein the training further comprises adjusting the batch size based on available memory and computational resources, tuning the learning rate and other hyperparameters to optimize performance, and adding regularization to prevent overfitting.
